# DEMANDE DE BREVET EUROPEEN

(11) **EP 2 178 334 A1**
(43) Date de publication de la demande: **21.04.2010**
(21) Numéro de dépôt: 09172094.6
(22) Date de dépôt: 02.10.2009
(51) Int. Cl.: H04W 76/04, H04W 4/22

(54) **Procédés de transmission et de gestion de trames de voix, produit programme d'ordinateur, moyen de stockage et dispositifs correspondants**

(30) Priorité: 17.10.2008 FR 0857096
(71) Demandeur: Sierra Wireless, 92442 Issy-les-Moulineaux Cedex (FR)
(72) Inventeur: Lefeuvre, Florian, 31000, TOULOUSE (FR)
(74) Mandataire: Guéné, Patrick

(57) **Abrégé**

Il est proposé un procédé de transmission de trames de voix, via un canal de transmission (150) réservé aux données voix, par un terminal émetteur (110) comprenant des moyens de génération (113) de trames de voix (10) à partir d'un signal voix (101). Un tel procédé comprend des étapes de : obtention de données non voix; sélection de données voix de la trame de voix (10) en fonction de données de configuration préalablement obtenues relatives à la transmission de données non voix sur le canal réservé (150); construction d'une trame de voix dégradée (10') par remplacement des données voix sélectionnées avec des données non voix; transmission de la trame de voix dégradée (10') via le canal réservé (150) vers un terminal récepteur (120). Côté terminal récepteur 120, il est proposé un procédé de gestion de trames de voix en provenance du terminal émetteur (110) comprenant des étapes de : détection d'un en-tête de données non voix compris dans la trame de voix (10'); extraction, depuis la trame de voix (10'), des données non voix, en fonction des données de configuration lues dans l'en-tête; transmission des données non voix extraites vers des moyens de traitement (122) de données non voix.

## Description

### 1. DOMAINE DE L'INVENTION

Le domaine de l'invention est celui des radiocommunications. Plus précisément, l'invention concerne la gestion de trames de voix (aussi appelées trames de paroles) par des dispositifs de radiocommunication, tels que les radiotéléphones, les PDA (pour « Personal Digital Assistant » en anglais), ou encore les dispositifs de radiocommunication embarqués par exemple dans des machines.

L'invention concerne plus particulièrement la transmission, sur un même canal de transmission, de données voix (« voice data » en anglais) et de données non-voix (« non-voice data », ou tout simplement « data » en anglais), par de tels dispositifs. De telles données non-voix sont déjà connues de l'art antérieur. Elles comprennent en particulier, mais non exclusivement, les messages texte SMS (« Short Message Service », pour « Service de message succincts »), les données multimédia (vidéos, images, ...) et les données fournies par des dispositifs de positionnement (GPS).

L'invention s'applique notamment, mais non exclusivement, aux dispositifs de radiocommunication sans carte SIM (pour « Subscriber Identity Module » en anglais, « module d'identité d'abonné » en français).

L'invention trouve notamment des applications dans le cadre d'appels d'urgence au moyen d'un radiotéléphone sans carte SIM.

### 2. ARRIÈRE-PLAN TECHNOLOGIQUE

Par souci de simplification de la description, on se limitera, dans toute la suite de ce document, à décrire le cas particulier où le dispositif de radiocommunication est un terminal de radiocommunication GSM. L'Homme du Métier étendra sans difficulté cet enseignement à tout autre type de terminal de radiocommunication.

Classiquement, un terminal de radiocommunication GSM ne peut accéder aux services du réseau GSM sans carte SIM. En effet, une carte SIM est un module comprenant toutes les données concernant l'abonné, à savoir un numéro d'identité IMSI (pour « International Mobile Subscriber Identity » en anglais), une clé d'authentification Ki, ainsi que des algorithmes associés d'authentification de l'abonné par le réseau GSM.

Ainsi, un terminal GSM comprenant une carte SIM peut transmettre des données voix et des données non-voix vers d'autres terminaux de radiocommunication via le réseau GSM.

On discute ci-après les inconvénients de l'art antérieur à travers le cas particulier où un utilisateur souhaite transmettre des informations de localisation (par exemple des coordonnées GPS) lors d'un appel d'urgence.

Un automobiliste qui possède un terminal GSM (par exemple un radiotéléphone), comprenant une carte SIM, peut en cas de panne, appeler les services d'urgence en composant le numéro 112 (numéro de téléphone réservé aux appels d'urgence et valide dans l'ensemble de l'Union européenne) ou appeler un dépanneur.

Dans une telle situation, l'automobiliste peut également utiliser son terminal GSM pour envoyer, sous forme de SMS ou d'appel de type DATA/GPRS, des données non-voix, par exemple, des informations de localisation fournis par un dispositif GPS par exemple embarqué dans le véhicule. Avec l'envoi de ces données non-voix, l'automobiliste permet aux secours ou au dépanneur de le localiser plus rapidement.

Les inventeurs ont constaté que, dans les situations de panne précitées, certains automobilistes sont dans l'incapacité d'appeler un dépanneur ou un proche du fait que leurs terminaux GSM ne comprennent pas de carte SIM ou comprennent une carte SIM défaillante (c'est-à-dire une carte SIM avec des données erronées), ou bien encore, sous l'effet de la panique (par exemple en cas d'accident grave), l'automobiliste peut avoir bloqué sa carte SIM en composant un mauvais mot de passe.

Ainsi, dans ces conditions (terminal GSM sans carte SIM), seul le numéro 112 peut être composé. Toutefois, dans certaines situations, cet appel d'urgence est insuffisant. En effet, en cas d'accident grave, l'automobiliste peut avoir besoin de secours rapides. Cependant, du fait que son terminal GSM ne comprend pas de carte SIM, il est dans l'incapacité d'envoyer des informations de localisation, obtenues à partir du dispositif GPS embarqué dans son véhicule. Les premiers secours peuvent donc mettre un certain temps avant d'arriver sur les lieux de l'accident et d'apporter les premiers soins à l'automobiliste.

Il existe donc un réel besoin de pouvoir transmettre des données non-voix sur un canal de transmission réservé à des données voix. En d'autres termes, il existe un besoin de pouvoir transmettre des données non-voix lors d'un appel d'urgence avec terminal de radiocommunication sans carte SIM.

On connaît déjà, dans l'état de la technique, différents types de techniques de transmission de données non-voix sur un canal de transmission réservé à des données voix.

Parmi les différents types de techniques connues, une technique notamment consiste à insérer dans des trames de description de silence (aussi appelée trame SID pour « Silence Insertion Descriptor » en anglais) des données non-voix et de transmettre les trames SID modifiées sur un canal de transmission réservé à des données voix. Cette technique connue est notamment discutée dans le document de brevet US 2007/0147327 (PHILIPS).

Bien qu'efficace, cette technique connue présente un certain nombre d'inconvénients.

Classiquement, un terminal de radiocommunication comprend des moyens de codage voix permettant de générer des trames de voix lorsqu'un signal voix est présent en entrée du terminal (c'est-à-dire lorsqu'un utilisateur parle) et des trames de silence (aussi appelée trames SID pour « Silence Identity Descriptor ») lorsqu'aucun signal voix n'est présent en entrée du terminal (c'est-à-dire lorsqu'aucune activité vocale n'est détectée).

Un inconvénient majeur de la technique connue précitée réside dans le fait que la transmission des données non-voix sur un canal de communication réservé à des données voix est conditionnée par l'absence de parole de la part de l'utilisateur. Ainsi, lorsqu'un utilisateur est en communication avec une personne et souhaite lui envoyer des données non-voix (par exemple des photos numériques), l'utilisateur doit interrompre sa conversation pendant toute la durée de la transmission des données non-voix.

En outre, cette technique connue nécessite la mise en oeuvre d'un mécanisme d'encapsulation (assurant l'insertion des données non-voix dans la trame SID) coûteux en termes de ressources de calcul et de consommation électrique.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique de transmission de données non-voix sur un canal de transmission réservé à des données voix qui soit efficace et simple à mettre en oeuvre.

Un objectif d'au moins un mode de réalisation de l'invention est de fournir une technique qui permette à un utilisateur d'envoyer des données non-voix sans interrompre sa discussion avec un interlocuteur.

Au moins un mode de réalisation de l'invention a également pour objectif de fournir une telle technique qui permette de réduire les coûts de transmission des données non-voix.

Un autre objectif d'au moins un mode de réalisation de l'invention est de fournir une telle technique qui permette d'optimiser la transmission des données non-voix en fonction du débit souhaité.

Un autre objectif d'au moins un mode de réalisation de l'invention est de fournir une telle technique qui permette d'augmenter la fiabilité des transmissions de données non-voix sur un canal de transmission réservé à des données voix.

Un objectif complémentaire d'au moins un mode de réalisation de l'invention est de fournir une telle technique qui soit peu coûteuse et compatible avec tous les réseaux de communication existants.

### 4. EXPOSÉ DE L'INVENTION

Dans un mode de réalisation particulier de l'invention, il est proposé un procédé de transmission de trames de voix par un terminal émetteur, ledit terminal émetteur comprenant :
- des moyens de génération d'au moins une trame de voix à partir d'un signal voix, chaque trame de voix comprenant des données voix ;
- des moyens de transmission de ladite au moins une trame de voix vers au moins un terminal récepteur, via un canal de transmission réservé à des données voix.
   Un tel procédé comprend les étapes suivantes :

- obtention de données de configuration relatives à la transmission de données non voix sur ledit canal de transmission réservé ;
- obtention de données non voix ;
- pour chaque trame de voix générée par lesdits moyens de génération :
   * sélection d'au moins une donnée voix parmi les données voix de ladite trame de voix, ladite sélection étant effectuée en fonction desdites données de configuration ;
   * construction d'une trame de voix dégradée par remplacement de ladite au moins une donnée voix sélectionnée avec au moins une desdites données non voix ;
   * insertion d'un en-tête de données non voix dans ladite trame de voix dégradée, ledit en-tête comprenant lesdites données de configuration ;
   * transmission, vers le terminal récepteur, de ladite trame de voix dégradée comprenant ledit en-tête, via ledit canal de transmission réservé.

Ainsi, l'invention repose sur une approche tout à fait nouvelle et inventive de la transmission de données non-voix sur un canal de transmission réservé à des données voix. En effet, l'invention consiste à dégrader des données voix au profit de données non-voix. Ainsi, l'invention prévoit de remplacer tout ou partie des données voix d'une trame de voix par des données non-voix. Selon l'invention, la dégradation de la trame de voix est conditionnée par des données de configuration prédéterminées.

On note également que les données non-voix peuvent être obtenues par lecture dans un moyen de stockage (comme par exemple une base de données comprise dans un terminal mobile) ou par saisie d'un utilisateur sur une interface homme/machine. Les données non-voix peuvent être aussi obtenues depuis un équipement externe via une liaison de communication (sans-fil ou filaire).

En outre, il convient de noter que les données non-voix peuvent être un flux de données continu ou bien à un bloc de données de taille figée.

Comme on le verra par la suite, l'en-tête permet au terminal récepteur de différencier les données non-voix des données voix dans la trame de voix dégradée.

De cette façon, chaque trame de voix dégradée est transmise sur un canal de transmission réservé à des données voix avec un en-tête permettant au terminal récepteur de différencier les données non-voix des données voix dans la trame de voix dégradée. Plus précisément, l'en-tête permet de repérer le début et la fin des données non-voix comprises dans la trame de voix.

De façon avantageuse, lesdites données de configuration comprennent une information relative à un ensemble de données non voix à insérer dans chaque trame de voix.

Ainsi, il est possible de définir une quantité de données voix à préempter dans chaque trame de voix. En d'autres termes, il est possible de définir la quantité de données non-voix à transmettre sur le canal de transmission réservé. Par exemple, l'invention permet de remplacer 90%, 50%, 2%... de données voix de la trame de voix.

Selon l'invention, les données de configuration peuvent être fournies soit de façon automatique (à l'aide d'un dispositif externe, par exemple, via une liaison de communication) soit façon manuelle par un utilisateur (par exemple via interface homme/machine).

Selon une variante, lesdites données de configuration comprennent une information relative à un critère de sélection de trames de voix. En cas de vérification positive dudit critère de sélection, ladite étape de sélection consiste à sélectionner toutes les données voix de ladite trame de voix.

Ainsi, l'invention prévoit de dégrader les trames de voix, non plus de manière systématique, mais en fonction d'un critère de sélection prédéterminé. Par exemple, il est possible de remplacer entièrement une trame de voix par des données non-voix toutes les 100 ms.

Avantageusement, le procédé comprend, en cas de vérification négative dudit critère de sélection, une étape de transmission de ladite trame de voix sur ledit canal de transmission réservé.

Ainsi, lorsque le critère de sélection (critère temporel) n'est pas vérifié, on ne dégrade pas la trame de voix courante, celle-ci étant directement transmise aux moyens de transmission.

De façon avantageuse, ledit critère de sélection est une temporisation.

Dans un autre mode de réalisation, il est proposé un procédé de gestion de trames de voix par un terminal récepteur, ledit terminal récepteur comprenant des moyens de réception d'au moins une trame de voix en provenance d'un terminal émetteur, via un canal de transmission réservé à des données voix. Un tel procédé comprend les étapes suivantes, pour chaque trame de voix reçue par lesdits moyens de réception :
- détection d'un en-tête de données non voix compris dans ladite trame de voix, ledit en-tête de données non voix comprenant des données de configuration relatives à la transmission de données non voix sur ledit canal de transmission réservé;
- en cas de détection positive, lecture desdites données de configuration ;
- construction d'une trame de voix partielle par extraction, depuis ladite trame de voix, d'au moins une donnée non voix, en fonction desdites données de configuration lues ;
- transmission de ladite au moins une donnée non voix extraite vers des moyens de traitement de données non voix.

Après lecture de l'en-tête compris dans la trame de voix dégradée, le terminal récepteur repère sans ambiguïté les données voix des données non-voix et extrait ainsi les données non-voix pour les transmettre vers une application dédiée.

De façon préférentielle, lesdites données de configuration comprennent une information relative à un ensemble de données non voix compris dans ladite trame de voix.

Le terminal récepteur connaît ainsi la quantité exacte de données non-voix à extraire.

Préférentiellement, le procédé comprend en outre les étapes suivantes :
- génération d'au moins une donnée voix aléatoire ;
- reconstitution d'une trame de voix complète par insertion de ladite au moins une donnée voix aléatoire dans ladite trame de voix partielle ;
- transmission de ladite trame de voix complète vers des moyens de décodage de données voix.

On évite ainsi l'effet de distorsion après reconstitution du signal voix par les moyens de décodage voix.

Dans un autre mode de réalisation, l'invention concerne un produit programme d'ordinateur téléchargeable depuis un réseau de communication et/ou enregistré sur un support lisible par ordinateur et/ou exécutable par un processeur. Ce produit programme d'ordinateur comprend des instructions de code de programme pour la mise en oeuvre du procédé de transmission précité (dans l'un quelconque de ses différents modes de réalisation) et/ou du procédé de gestion précité (dans l'un quelconque de ses différents modes de réalisation), lorsque ledit programme est exécuté sur un ordinateur.

Dans un autre mode de réalisation, l'invention concerne un moyen de stockage lisible par ordinateur, éventuellement totalement ou partiellement amovible, stockant un programme d'ordinateur comprenant un jeu d'instructions exécutables par un ordinateur pour mettre en oeuvre le procédé de transmission précité (dans l'un quelconque de ses différents modes de réalisation) et/ou le procédé de gestion précité (dans l'un quelconque de ses différents modes de réalisation).

Dans un autre mode de réalisation, il est proposé un terminal émetteur destiné à la transmission de trames de voix comprenant :
- des moyens de génération d'au moins une trame de voix à partir d'un signal voix, chaque trame de voix comprenant des données voix ;
- des premiers moyens de transmission de ladite au moins une trame de voix vers au moins un terminal récepteur, via un canal de transmission réservé à des données voix.
   Le terminal émetteur comprend en outre :

- des premiers moyens d'obtention de données de configuration relatives à la transmission de données non voix sur ledit canal de transmission réservé ;
- des seconds moyens d'obtention de données non voix ;
- des moyens de sélection d'au moins une donnée voix parmi les données voix de ladite trame de voix, ladite sélection étant effectuée en fonction desdites données de configuration ;
- des moyens de construction d'une trame de voix dégradée par remplacement de ladite au moins une donnée voix sélectionnée avec au moins une desdites données non voix ;
- des moyens d'insertion d'un en-tête de données non voix dans ladite trame de voix dégradée, ledit en-tête comprenant lesdites données de configuration ;
- des seconds moyens de transmission, vers le terminal récepteur, de ladite trame de voix dégradée comprenant ledit en-tête, via ledit canal de transmission réservé.

Dans un autre mode de réalisation de l'invention, l'invention concerne un terminal récepteur destiné à la gestion de trames de voix comprenant des moyens de réception d'au moins une trame de voix en provenance d'un terminal émetteur, via un canal de transmission réservé à des données voix. Ledit terminal récepteur comprend en outre :
- des moyens de détection d'un en-tête de données non voix compris dans ladite trame de voix, ledit en-tête de données non voix comprenant des données de configuration relatives à la transmission de données non voix sur ledit canal de transmission réservé ;
- des moyens de lecture desdites données de configuration, en cas de détection positive ;
- des moyens de construction d'une trame de voix partielle comprenant eux-mêmes des moyens d'extraction permettant d'extraire, depuis ladite trame de voix, au moins une donnée non voix, en fonction desdites données de configuration lues par lesdits moyens de lecture ;
- des premiers moyens de transmission de ladite au moins une donnée non voix extraite vers des moyens de traitement de données non voix.

Avantageusement, le terminal récepteur comprend en outre :
- des moyens de génération d'au moins une donnée voix aléatoire ;
- des moyens de reconstitution d'une trame de voix complète par insertion de ladite au moins une donnée voix aléatoire dans ladite trame de voix partielle ;
- des second moyens de transmission de ladite trame de voix complète vers des moyens de décodage de données voix.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente un schéma synoptique mettant en oeuvre un dispositif de transmission de trames de voix, côté émetteur, et un dispositif de gestion trames de voix, côté récepteur, selon un mode de réalisation particulier de l'invention ;
- la figure 2 présente un schéma bloc fonctionnel illustrant un mode de réalisation particulier du procédé de transmission selon l'invention ;
- la figure 3 illustre un exemple de structure d'une trame de voix et d'une trame de silence, dans le cadre d'un codage de parole à plein débit ;
- la figure 4 représente un organigramme d'un algorithme mettant en oeuvre le procédé de transmission selon l'invention, dans le cas où le débit des données non-voix est important ;
- la figure 5 représente un organigramme d'un algorithme mettant en oeuvre le procédé de transmission selon l'invention, dans le cas où le débit des données non-voix est faible ;
- la figure 6 représente un organigramme d'un algorithme mettant en oeuvre le procédé de transmission selon l'invention, dans le cas où le débit des données non-voix est moyen ;
- la figure 7 représente un organigramme d'un algorithme mettant en oeuvre le procédé de gestion selon un mode de réalisation particulier de l'invention ;
- les figures 8a et 8b représentent respectivement la structure simplifiée d'un mode de réalisation particulier d'un dispositif de transmission et d'un dispositif de réception selon l'invention.

### 6. DESCRIPTION DÉTAILLÉE

Sur toutes les figures du présent document, les éléments et étapes identiques sont désignés par une même référence numérique.

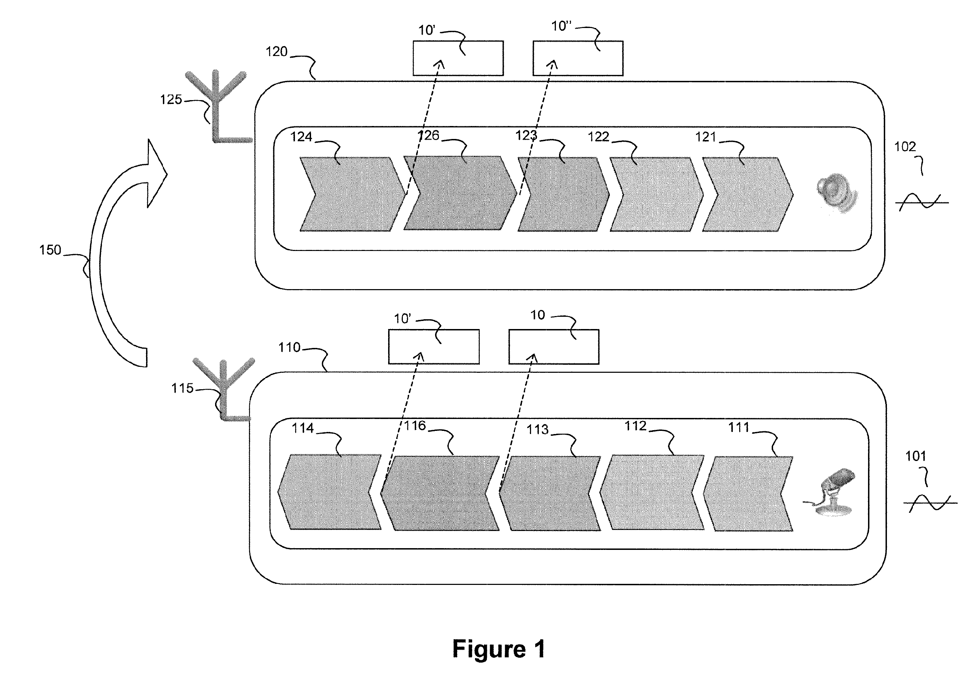

On présente, en relation avec la **figure 1**, un schéma synoptique mettant en oeuvre un dispositif de transmission 116 de trames de voix, côté émetteur, et un dispositif de gestion 126 de trames de voix, côté récepteur, selon un mode de réalisation particulier de l'invention.

Côté terminal émetteur 110, une interface microphone 111 convertit un signal voix analogique 101 en un signal voix numérique, à l'aide par exemple d'un convertisseur analogique/numérique. Des moyens de mise en forme 112 permettent de mettre en forme le signal voix numérique avant traitement par un vocodeur 113 (de l'anglais « voice encoder », c'est-à-dire un « codeur de voix » en français).

Le vocodeur 113, aussi appelé par la suite moyens de génération, code le signal voix issu des moyens de mise en forme 112 (selon un codage qui lui est propre), en ne gardant que les composantes fondamentales, afin de minimiser l'information (données voix) à transmettre au terminal récepteur 120. Les moyens de génération 113 génèrent ensuite, à une fréquence déterminée (par exemple toutes les 20 ms dans le cadre du codage de la parole à plein débit (ou « Full Rate » en anglais)), une trame de voix 10.

Il est à noter que les moyens de génération 113 permettent également d'adapter le débit des données voix qui sont transmises sur le réseau GSM.

Avant de procéder au codage canal, le dispositif de transmission 116 met en oeuvre, dans un premier temps, pour chaque trame de voix 10 générée, un premier mécanisme de préemption permettant de sélectionner des données voix appartenant à la trame de voix 10. Dans un deuxième temps, le dispositif de transmission 116 met en oeuvre un second mécanisme de remplacement des données voix préemptées par des données non-voix. De tels mécanismes conduisent à l'obtention d'une nouvelle trame de voix, dite trame de voix dégradée 10', permettant de véhiculer des données non-voix sur le canal de transmission 150 réservé à des données voix. Les trames de voix dégradées 10' sont ensuite envoyées à un codeur canal 114, aussi appelé par la suite moyens de codage canal. Ces moyens de codage 114 apportent, par introduction de redondance, une protection contre les erreurs de transmission pouvant apparaître lors de la transmission des trames de voix sur le réseau GSM. Chaque trame de voix dégradée est ensuite modulée et transmise par des moyens de transmission (non représentés), via une antenne d'émission 115, sur le canal de transmission 150 réservé à des données voix.

Côté terminal récepteur 120, les trames de voix dégradées sont reçues par des moyens de réception (non représentés), via une antenne de réception 125, puis démodulées et envoyées à un décodeur de canal 124, aussi appelé moyens de décodage canal. Afin d'obtenir des trames de voix exploitables par le décodeur voix 123, aussi appelé moyens de décodage voix, le dispositif de gestion 126 est chargé, dans un premier temps, de séparer les données voix des données non-voix. Après extraction des données non-voix de la trame de voix dégradée 10', le dispositif de gestion 126 est chargé, dans un second temps, de reconstituer une trame de voix complète 10" (c'est-à-dire une trame comprenant uniquement des données voix), puis de l'envoyer au décodeur de voix, aussi appelé moyens de décodage voix. Le signal voix obtenu après décodage est ensuite traité par des moyens de mise en forme 122 consistant à mettre en forme le signal voix numérique avant traitement par l'interface écouteur 121.

Enfin, l'interface écouteur 121 convertit le signal voix numérique issu des moyens de mise en forme 122 en un signal voix analogique 102.

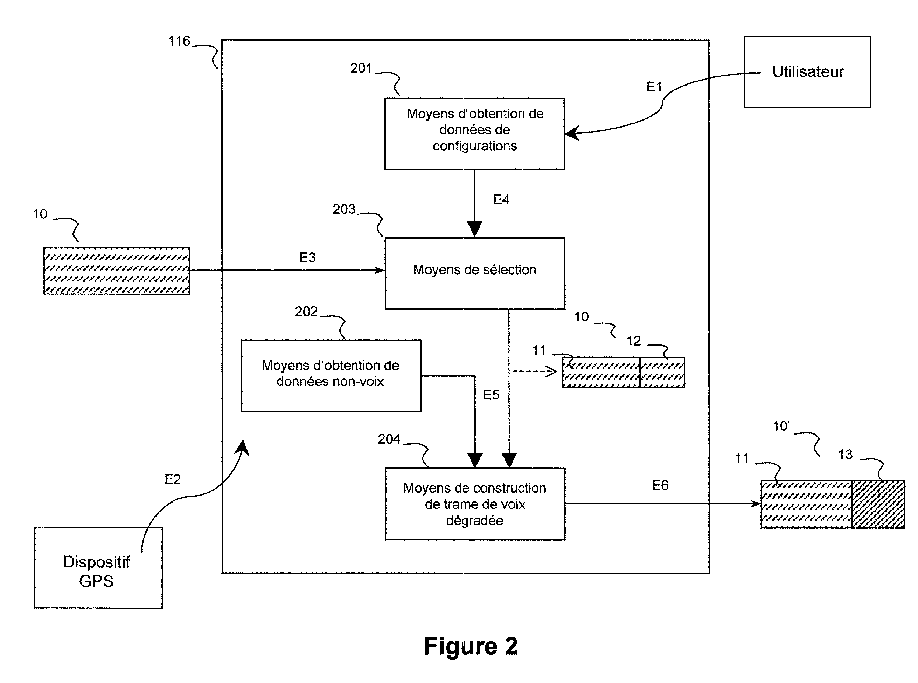

On décrit maintenant en relation avec la **figure 2**, un schéma bloc fonctionnel illustrant un mode de réalisation particulier du procédé de transmission selon l'invention.

Lors d'une première étape E1, un utilisateur saisit, via une interface homme/machine (non représentée) du terminal de radiocommunication 110 par exemple, des données de configuration relatives à la transmission des données non-voix sur le canal de transmission 150. Une fois les données de configuration validées par l'utilisateur, elles sont transmises à des moyens d'obtention de données de configuration 201. À titre d'exemple illustratif, on considère un utilisateur saisissant un taux de remplissage des trames de voix de 30%.

Lors d'une seconde étape E2, un équipement externe (dispositif GPS embarqué par exemple) fournie des données non-voix (par exemple des données de positionnement du terminal 110), à des moyens d'obtention de données non-voix 202.

Lors d'une troisième étape E3, des moyens de sélection 203 interceptent, en sortie des moyens de génération 113, une trame de voix 10. Après avoir pris connaissance des données de configuration, lors d'une quatrième l'étape E4, les moyens de sélection 202 se chargent de préempter, au sein de la trame de voix 10, un nombre de données voix qui est fonction des données de configuration préalablement saisies par l'utilisateur. Dans le cas de la présente figure, le bloc de données 12 constitue les données voix de la trame de voix qui ont été préemptées. Elles correspondent en effet au taux de remplissage de 30% préalablement saisi par l'utilisateur.

Lors d'une cinquième étape E5, des moyens de construction 204 effectuent un remplacement des données préemptées (bloc de données 11) par au moins une partie des données de positionnement préalablement reçues par les moyens d'obtention 202, de sorte qu'une trame de voix dégradée 10' soit générée, la trame de voix dégradée comprenant des données voix (bloc référencé 11) et des données non-voix (bloc référencé 13).

Lors d'une sixième étape E6 étape, la trame de voix dégradée est ensuite transmise aux moyens de codage canal 114.

Il est à noter que, tant que l'ensemble des données non-voix à transmettre n'a pas été totalement transmis sur le canal de transmission 150 réservé aux données voix, le procédé de transmission de l'invention est réitéré.

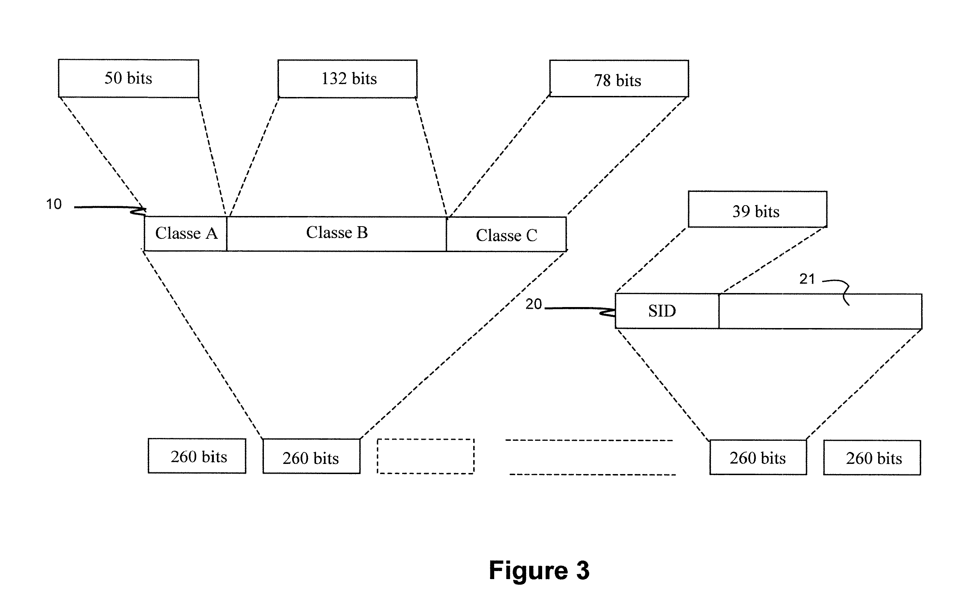

On présente maintenant, en relation avec la **figure 3**, un exemple de structure d'une trame de voix 10 et d'une trame de silence 20, dans le cadre d'un codage de la parole à plein débit ou de type FR (pour « Full Rate » en anglais).

Tel que déjà rappelé plus haut, en relation avec l'art antérieur, suivant l'activité vocale à l'entrée d'un terminal de radiocommunication GSM, soit une trame de voix 10 est générée en cas d'activité vocale, soit une trame SID (pour « Silence Insertion Descriptor ») générée en cas d'inactivité vocale.

Comme illustrée sur la figure 3, la trame de voix 10 comprend 260 bits de données voix décomposée trois paquets de classes différentes (classes A, B et C). En effet, lors de la transmission de données voix sur un canal de transmission 150 réservé à des données voix, des erreurs de transmission peuvent apparaître, celles-ci n'étant pas réparties de façon équivalente dans le temps. Classiquement, les moyens de générations 113 répartissent alors les bits de chaque trame de voix 10 en plusieurs paquets de données suivant leurs degrés de sensibilité aux erreurs, le paquet de classe A étant le paquet le plus sensible aux erreurs de transmission. Dans le cadre du codage FR, chaque trame de voix 10 comprend trois paquets de tailles différentes : les paquets de classe A, B et C comprenant respectivement 50 bits, 132 bits de données, et 78 bits de données. Les paquets de classes A et B sont généralement considérés comme des paquets dont les données sont prioritaires. Ces paquets seront donc par la suite protégés par le codage canal. Quant au paquet de classe C, il est considéré comme moins important et ne bénéficiera donc pas du codage canal.

Dans le cadre de la présente invention, il est possible par exemple de dégrader une trame de voix 10 en effectuant un remplacement de tout ou partie des données voix du paquet de classe C. Ce paquet étant moins important, il sera avantageusement dégradé en premier. La présente invention prévoit également la possibilité par exemple de dégrader une trame de voix en effectuant un remplacement de tout ou partie des données voix du paquet de classe C et tout ou partie des données voix du paquet de classe B et/ou tout ou partie des données voix du paquet de classe A, selon les données de configuration prédéterminées.

Dans un mode de réalisation particulier, la présente invention peut être mise en oeuvre en dégradant une trame de silence 20. Une telle trame comprend un bloc SID de 39 bits, ainsi qu'un bloc de données vide 21, ce dernier bloc pouvant être remplacé, en tout ou partie, par des données non-voix.

Il est à noter qu'une telle trame de silence 20 n'est pas directement issue des moyens de génération 113. En effet, les moyens de génération 113 fournissent en sortie une trame SID de 39bits de données relatives à la génération d'un bruit de confort pour le terminal récepteur. Cette trame SID est transformée par la suite, par des moyens de transformation (non représentés sur les figures), en une trame de voix particulière, dénommée trame de silence 20, qui est ensuite transmise aux moyens de sélection 203 du dispositif de transmission. Ainsi, les données contenues dans cette trame de silence 20 et qui sont différentes des données SID (c'est-à-dire les données qui seront, par la suite, introduites dans le bloc de données vide) ne seront pas effacées, côté terminal récepteur.

On rappelle que, dans un mode de réalisation particulier, de tels effacements peuvent se produire lors de la mise en oeuvre de mécanismes de copie ou de recopie des données, ou bien lors du transfert des données sur le réseau.

Le terminal récepteur 120 prendra alors en compte la totalité de la trame de silence 20, plutôt que de prendre en compte, de manière classique, uniquement les 39 bits de la trame SID.

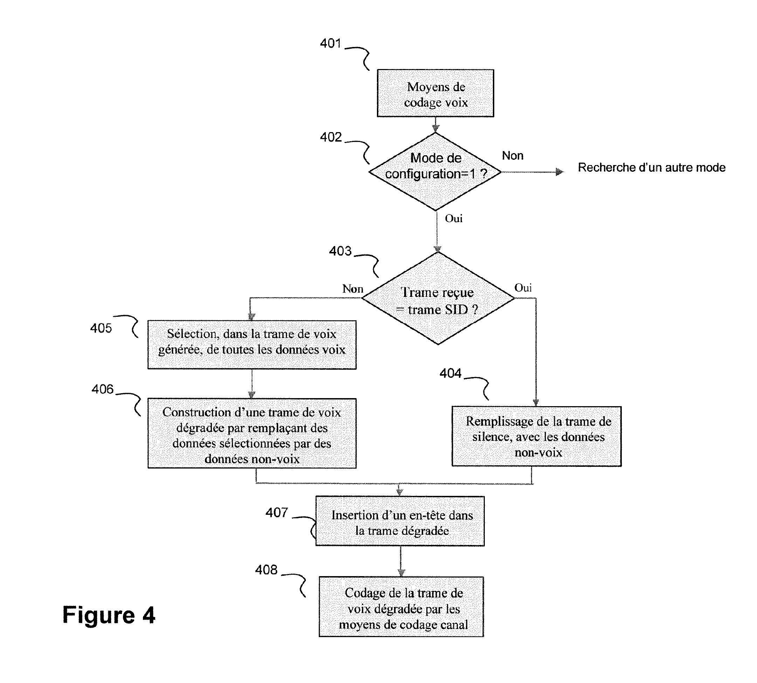

Les figures 4, 5 et 6 décrites ci-après présentent des organigrammes illustrant le procédé de transmission d'un mode de réalisation particulier de l'invention selon trois configurations choisies par un utilisateur d'un terminal de radiocommunication GSM.

On présente maintenant, en relation avec la **figure 4**, un organigramme d'un algorithme permettant de mettre en oeuvre le procédé de transmission dans le cas où le débit des données non-voix est important (mode de configuration 1).

Ce mode de configuration illustre, par exemple, le cas d'un utilisateur souhaitant configurer son terminal GSM pour obtenir un débit de transmission de données non-voix élevé. Dans ce cas, toutes les données voix de chaque trame de voix sont remplacées par des données non-voix, jusqu'à ce que toutes les données non-voix soient transmises sur le réseau GSM.

Lors de l'étape 401, les moyens de génération 113 génèrent une trame de voix 10 qui est interceptée par les moyens de sélection 203. Lors de l'étape suivante 402, on vérifie si les données de configuration correspondent au mode de configuration 1. En cas de vérification négative, un autre mode de configuration est alors recherché. En cas de vérification positive, on passe à l'étape 403 pour vérifier si la trame générée par les moyens de génération 113 correspond à une trame de silence 20.

Si la trame générée correspond à une trame SID, des moyens de transformation (non représentés sur les figures) transforment la trame SID en une trame de silence 20, telle que décrite à la figure 3. Les moyens de construction 204 complètent ensuite la trame de silence 20, lors de l'étape 404, en y insérant des données non-voix dans le bloc de données vide 21. On obtient alors une trame de voix dite dégradée. Lors de l'étape 407, les moyens de construction 204 insèrent, dans la trame de voix dégradée (et plus précisément dans le bloc de données vide 21), un premier en-tête comprenant des informations représentatives de la présence de données non-voix et un second en-tête comprenant des informations représentatives de la présence d'un bloc SID dans la trame de voix dégradée. La trame de voix dégradée 10' ainsi obtenue comprend un bloc de données SID, un en-tête spécifique associé aux données SID, des données non-voix et un en-tête spécifique associé aux données non-voix.

Dans un mode de réalisation particulier, l'en-tête associé aux données SID et l'en-tête associé aux données non-voix peuvent ne former qu'un seul et même en-tête dans la trame de voix dégradées 10', c'est-à-dire un en-tête regroupant les deux type informations précitées.

Si la trame générée correspond à une trame de voix, on passe à l'étape 405 dans laquelle toutes les données de la trame de voix 10 sont sélectionnées par les moyens de sélection 203. Lors de l'étape suivante 406, une trame de données dégradée 10' est construite en remplaçant, bit par bit, les données voix sélectionnées par les données non-voix obtenues par les moyens d'obtention 202. Par exemple, dans le cas particulier d'un codage voix de type Full Rate, selon le mode de configuration 1, il est possible d'obtenir une transmission de données non-voix avec un débit proche de 13 kbits/s.

Lors de l'étape 407, les moyens de construction 204 effectuent en outre une insertion d'un en-tête dans la trame de voix dégradée 10' comprenant des informations représentatives de la présence de données non-voix dans la trame de voix, afin de signaler au terminal récepteur (et plus précisément au niveau du dispositif de gestion 126), lors de la réception de la trame de voix dégradée, qu'il s'agit d'une trame de voix comprenant des données non-voix. Plus précisément, l'en-tête contient une information relative à la quantité de données non-voix comprises dans la trame de voix dégradée 10'. Dans le cas du mode de configuration 1, l'en-tête véhicule une information indiquant que la trame de voix contient 100% de données non-voix.

Enfin, après avoir inséré l'en-tête dans la trame de voix dégradée 10', celle-ci est ensuite transmise, par les moyens de construction 204, vers les moyens de codage canal 114 chargés de protéger, lors de l'étape 409, les données non-voix contre les erreurs de transmission.

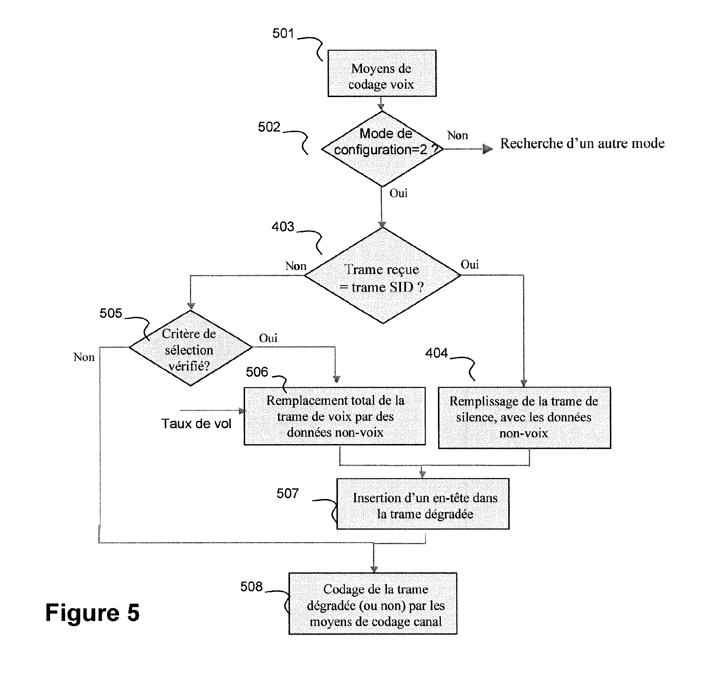

On présente maintenant, en relation avec la **figure 5**, un organigramme d'un algorithme permettant de mettre en oeuvre le procédé de transmission dans le cas où le débit des données non-voix est faible (mode de configuration 2).

Ce mode de configuration illustre, par exemple, le cas d'un utilisateur qui configure son terminal de radiocommunication de sorte que le débit de transmission des données non-voix soit particulièrement faible. La qualité de la voix dans ce mode de configuration est alors préservée.

Lors de l'étape 501, les moyens de génération 113 génèrent une trame de voix 10 qui est interceptée par les moyens de sélection 203. Lors de l'étape suivante 502, on vérifie si les données de configuration correspondent au mode de configuration 2. En cas de vérification négative, un autre mode de configuration est alors recherché. En cas de vérification positive et comme précédemment illustré en relation avec la figure 4, on vérifie à l'étape 403 si la trame générée par les moyens de génération 113 correspond à une trame de silence 20.

Si la trame interceptée par les moyens de sélection 203 correspond à une trame de silence 20, alors les moyens de construction 204 complètent la trame de silence 20, lors de l'étape 404, en y insérant des données non-voix dans le bloc de données vide 21. On obtient alors une trame de voix dite dégradée. Lors de l'étape 507, les moyens de construction 204 insèrent également, dans la trame de voix dégradée (et plus précisément dans le bloc de données vide 21), un premier en-tête comprenant des informations représentatives de la présence de données non-voix dans la trame de voix dégradée et un second en-tête comprenant des informations représentatives de la présence d'un bloc SID dans la trame de voix dégradée. La trame de voix dégradée 10' ainsi obtenue comprend un bloc de données SID, un en-tête spécifique associé aux données SID, des données non-voix et un en-tête spécifique associé aux données non-voix.

Si la trame générée est une trame de voix 10, on passe à l'étape 505 dans laquelle un critère de sélection (critère temporel) est vérifié. Le critère de sélection est basé sur une temporisation pouvant notamment être réalisée au moyen d'un compteur (« timer » en anglais). Il consiste, lorsque la temporisation est activée, à accorder un délai lors du déroulement du procédé pour déclencher la sélection d'une trame de voix. En d'autres termes, ce mécanisme (pouvant être défini par un taux de vol de trames) permet de sélectionner, puis de dégrader une trame parmi une pluralité de trames de voix générées par les moyens de génération 113, de sorte qu'il y ait suffisamment de trames de voix non dégradées pour avoir la possibilité de reconstituer un signal voix analogique audible au niveau du terminal récepteur. En effet, les terminaux GSM sont généralement conçus pour fonctionner correctement malgré la perte de trames. À titre d'exemple, un taux de vol de 20% saisi par un utilisateur permet d'informer les moyens de sélection 203 qu'une trame de voix à dégrader doit être sélectionnée toutes les 100 ms. Lors de l'étape 506, les moyens de construction 204 effectuent, pour chaque trame de voix sélectionnée, un remplacement de toutes les données voix de la trame de voix 10 avec les données non-voix, conduisant à la construction d'une trame de voix dégradée 10'.

Lors de l'étape 507, les moyens de construction 204 effectuent en outre une insertion d'un en-tête dans la trame de voix dégradée 10' comprenant des informations représentatives de la présence de données non-voix dans la trame de voix, afin de signaler au terminal récepteur (et plus précisément au niveau du dispositif de gestion 126), lors de la réception de la trame de voix dégradée 10', qu'il s'agit d'une trame de voix comprenant des données non-voix.

Si, à l'étape 505, aucun critère de sélection n'est vérifié, la trame de voix ne subit aucune modification. Cette trame de voix, non dégradée, est alors directement transmise aux moyens de codage canal 114 chargés de protéger, lors de l'étape 508, les données contre les erreurs de transmission.

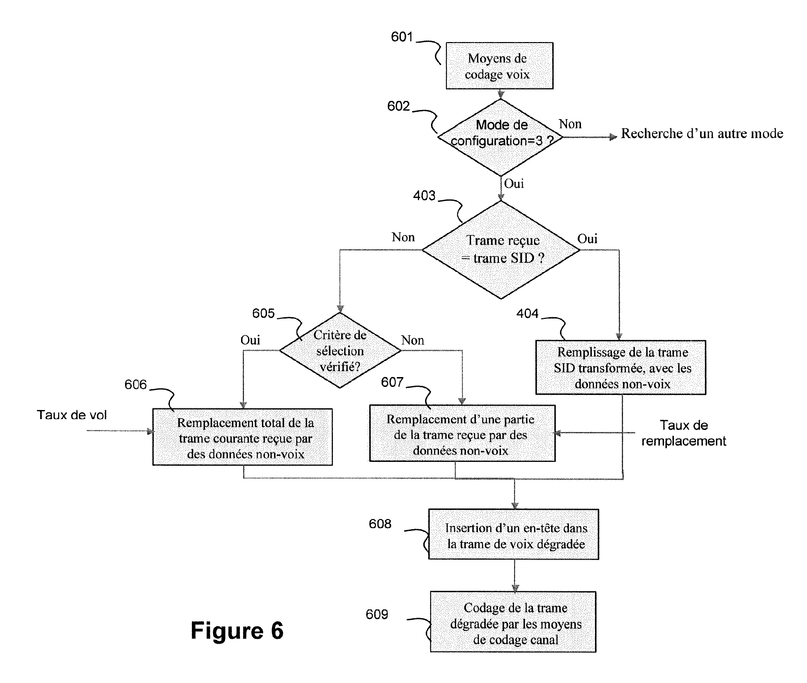

On présente maintenant, en relation avec la **figure 6**, un organigramme d'un algorithme permettant de mettre en oeuvre le procédé de transmission dans le cas où le débit des données non-voix à transmettre est moyen (mode de configuration 3).

Lors de l'étape 601, les moyens de génération 113 génèrent une trame de voix 10 qui est interceptée par les moyens de sélection 203. Lors de l'étape suivante 602, on vérifie si les données de configuration correspondent au mode de configuration 3. En cas de vérification négative, un autre mode de configuration est alors recherché. En cas de vérification positive et comme précédemment illustré en relation avec les figures 4 et 5, on vérifie, à l'étape 403, si la trame générée par les moyens de génération 113 correspond à une trame de silence 20.

Si la trame interceptée par les moyens de sélection 203 correspond à une trame de silence 20, alors les moyens de construction 204 complètent la trame de silence 20, lors de l'étape 404, en y insérant des données non-voix dans le bloc de données vide 21 de la trame de silence 20. On obtient alors une trame de voix dite dégradée. Lors de l'étape 608, les moyens de construction 204 insèrent également dans la trame de voix dégradée (et plus précisément dans le bloc de données vide 21) un premier en-tête comprenant des informations représentatives de la présence de données non-voix dans la trame de voix dégradée et un second en-tête comprenant des informations représentatives de la présence d'un bloc SID dans la trame SID transformée. La trame de voix dégradée 10' ainsi obtenue comprend un bloc de données SID, un en-tête spécifique associé aux données SID, des données non-voix et un en-tête spécifique associé aux données non-voix.

Si la trame générée est une trame de voix 10, on passe à l'étape 605 dans laquelle le critère de sélection de trame de voix doit être vérifié, comme illustré en relation avec la figure 5. En cas de vérification positive, pour chaque trame de voix sélectionnée, les moyens de construction 204 effectuent, lors de l'étape 606, un remplacement de toutes les données de la trame de voix sélectionnée par des données non-voix.

En cas de vérification négative, les moyens de construction 204 effectuent, lors de l'étape 607, pour chaque trame de voix sélectionnée, un remplacement d'une partie des données voix de la trame de voix 10 avec les données non-voix en fonction d'un taux de remplissage prédéterminé. Par exemple, dans le cas particulier d'un codage voix FR, si un utilisateur saisit un taux de remplacement de 30%, c'est-à-dire un taux permettant de remplacer uniquement les données du paquet de classe C, il est possible d'obtenir une transmission de données non-voix avec un débit proche de 3,9 kbits/s (soit 78 bits tous les 20 ms).

De façon avantageuse, le taux de remplacement pouvant être fixé lors de la saisie des données de configuration, il est possible d'ajuster le débit de transmission des données non-voix, tout en contrôlant la qualité de transmission de la voix.

Ensuite, lors de l'étape 608, les moyens de construction 204 effectuent en outre une insertion d'un en-tête, dans la trame de voix dégradée 10', comprenant des informations représentatives de la présence de données non-voix dans la trame de voix, afin de signaler au terminal récepteur (plus précisément au niveau du dispositif de gestion 126), lors de la réception de la trame de voix dégradée 10', qu'il s'agit d'une trame de voix comprenant uniquement des données non-voix (si l'étape 606 est exécutée) ou d'une trame de voix comprenant des données voix et des données non-voix (si l'étape 607 est exécutée), ou encore qu'il s'agit d'une trame de voix comprenant des données non-voix et des données SID (si l'étape 604 est exécutée). Dans ce dernier cas, la trame de voix dégradée 10' peut comprendre également un en-tête supplémentaire, spécifique associé aux données SID, pour indiquer, au terminal récepteur, la présence d'un bloc SID dans la trame dégradée 10'.

Enfin, chaque trame de voix dégradée 10', est ensuite transmise directement aux moyens de codage canal 114 chargés de protéger, lors de l'étape 609, les données contre les erreurs de transmission.

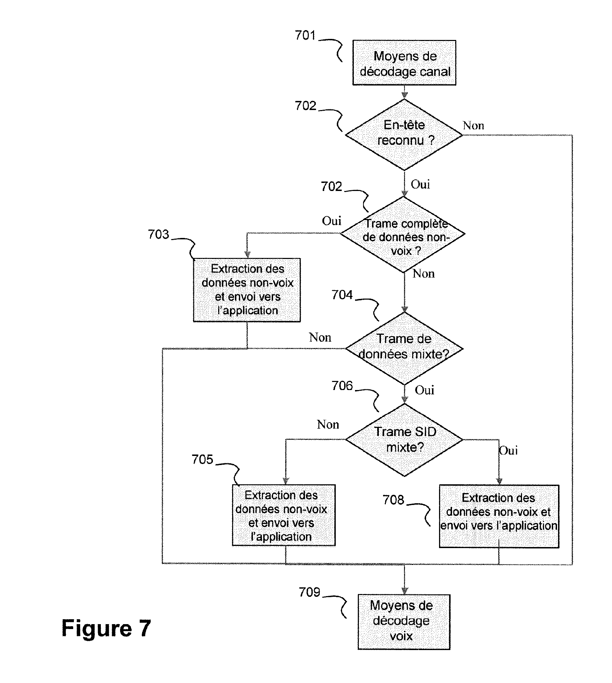

On présente maintenant, en relation avec la **figure 7**, un organigramme d'un algorithme permettant de mettre en oeuvre le procédé de réception selon un mode de réalisation particulier de l'invention.

Le procédé de gestion démarre à l'étape 701 où les moyens de décodage canal effectue un décodage de chaque trame de voix dégradée 10' reçue, via le canal de transmission 150. Lors de l'étape 702, c'est-à-dire avant le transfert des trames, de façon classique, aux moyens de décodage 123, chaque trame est interceptée pour effectuer un test de détection d'un en-tête. Deux cas peuvent se présenter.

Lorsqu'aucun en-tête n'est détectée dans la trame de voix reçue, la trame de voix est considérée comme une trame de voix classique (c'est-à-dire non dégradée). Dans ce cas, lors de l'étape 703, cette dernière est envoyée directement aux moyens de décodage voix 213 pour un traitement des données voix à l'étape 709.

Lorsqu'un en-tête est détecté au sein de la trame de voix reçue, à l'étape 702, la trame de voix est considérée comme une trame de voix dégradée 10' et une étape de lecture de l'en-tête est effectuée afin de connaître la constitution exacte de cette trame de voix 10'. Selon les données contenues dans l'en-tête, trois cas de figure sont possibles.

Dans un premier cas de figure, les données contenues dans l'en-tête indiquent que la trame de voix dégradée contient uniquement des données non-voix. L'étape 703 est alors exécutée. Toutes les données non-voix sont extraites de la trame de voix dégradée 10' et remplacées par des données voix aléatoires. Cette opération permet de reconstituer une trame de voix complète 10" pour minimiser le risque de distorsion pouvant apparaître lors de la reconstitution du signal voix analogique. La trame de voix reconstituée 10" est transmise aux moyens de décodage voix 213 lors de l'étape 709. Les données non-voix extraites, quant à elles, sont envoyées vers une application.

Dans un deuxième cas de figure (étape 704), les données contenues dans l'en-tête indiquent que la trame de voix dégradée 10' contient des données voix et non-voix (dite trame de données mixte). L'étape 705 est alors exécutée. La partie des données non-voix est extraite de la trame de voix dégradée 10' et remplacée par des données voix aléatoires, afin de minimiser le risque de distorsion du signal voix. La trame de voix reconstituée 10" est transmise aux moyens de décodage voix 213 lors de l'étape 709. Les données non-voix extraites, quant à elles, sont envoyées vers une application.

Dans un troisième cas de figure (étape 706), selon un mode de réalisation particulier de l'invention, les données contenues dans l'en-tête indiquent que la trame de voix dégradée est une trame contenant un bloc de données SID et des données non-voix.

Dans une variante d'un mode de réalisation, un premier en-tête (associé aux données SID) indique que la trame contient un bloc SID et un second en-tête (associé aux données non-voix) indique que la trame contient des données non-voix.

L'étape 707 est ensuite exécutée. La partie des données non-voix est extraite de la trame de voix dégradée et envoyée vers une application. Les données SID sont transmises aux moyens de décodage voix 213, lors de l'étape 709.

Il est à noter que, dans le cas d'une trame de silence, il n'est pas nécessaire de générer des données aléatoires pour remplacer la partie de données non-voix extraite de la trame de silence.

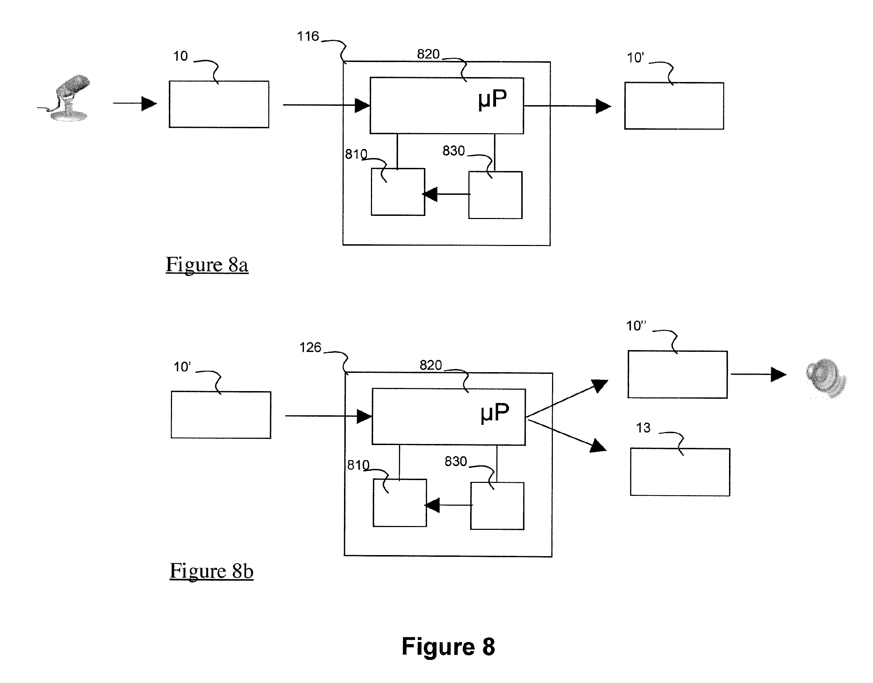

Les **figures 8a et 8b** présentent de façon schématique la structure d'un dispositif de transmission de trames de voix 116 (figure 8a) et d'un dispositif de gestion de trames de voix 126 (figure 8b) selon un mode de réalisation particulier de l'invention.

En relation avec la figure 8a, le dispositif de transmission 116 comprend une mémoire 810, et une unité de traitement 820 équipée d'un microprocesseur µP (tel qu'un microprocesseur de traitement de signal (DSP pour « Digital Signal Processor) par exemple), qui est piloté par un programme d'ordinateur (ou application) 830 mettant en oeuvre le procédé de transmission selon l'invention. L'unité de traitement 820 reçoit en entrée une trame de voix 10. Le microprocesseur µP traite cette trame de voix 10, selon les instructions du programme 830, pour obtenir une trame de voix dégradée 10' en fonction des données de configuration prédéterminées.

En relation avec la figure 8b, le dispositif de gestion 126 comprend une mémoire 810, et une unité de traitement 820 équipée d'un microprocesseur µP (tel qu'un microprocesseur de traitement de signal (DSP pour « Digital Signal Processor) par exemple), qui est piloté par un programme d'ordinateur (ou application) 830 mettant en oeuvre le procédé de gestion selon l'invention. L'unité de traitement 820 reçoit en entrée une trame de voix dégradée 10'. Le microprocesseur µP traite cette trame de voix, selon les instructions du programme 830, pour d'une part extraire les données non-voix 13 et les envoyer vers une application, et d'autre part obtenir une trame de voix reconstituée 10''.

## Revendications

1. Procédé de transmission de trames de voix par un terminal émetteur (110), ledit terminal émetteur (110) comprenant :
- des moyens de génération (150) d'au moins une trame de voix à partir d'un signal voix (101), chaque trame de voix comprenant des données voix ;
- des moyens de transmission de ladite au moins une trame de voix vers au moins un terminal récepteur (120), via un canal de transmission (150) réservé à des données voix,
**caractérisé en ce que** ledit procédé comprend les étapes suivantes :
- obtention (E1) de données de configuration relatives à la transmission de données non voix sur ledit canal de transmission réservé (150) ;
- obtention de données non voix ;
- pour chaque trame de voix générée par lesdits moyens de génération (113) :
* sélection d'au moins une donnée voix parmi les données voix de ladite trame de voix, ladite sélection étant effectuée en fonction desdites données de configuration ;
* construction (E5) d'une trame de voix dégradée (10') par remplacement de ladite au moins une donnée voix sélectionnée avec au moins une desdites données non voix ;
* insertion d'un en-tête de données non voix dans ladite trame de voix dégradée (10'), ledit en-tête comprenant lesdites données de configuration ;
* transmission, vers le terminal récepteur (120), de ladite trame de voix dégradée (10') comprenant ledit en-tête, via ledit canal de transmission réservé (150).

2. Procédé selon la revendication 1, **caractérisé en ce que** lesdites données de configuration comprennent une information relative à un ensemble de données non voix à insérer dans chaque trame de voix.

3. Procédé selon la revendication 1, **caractérisé en ce que** lesdites données de configuration comprennent une information relative à un critère de sélection de trames de voix, et **en ce que**, en cas de vérification positive dudit critère de sélection, ladite étape de sélection consiste à sélectionner toutes les données voix de ladite trame de voix.

4. Procédé selon la revendication 3, **caractérisé en ce qu'**il comprend, en cas de vérification négative dudit critère de sélection, une étape de transmission de ladite trame de voix sur ledit canal de transmission réservé (150).

5. Procédé selon l'une quelconque des revendications 3 et 4, **caractérisé en ce que** ledit critère de sélection est une temporisation.

6. Procédé de gestion de trames de voix par un terminal récepteur (120), ledit terminal récepteur (120) comprenant des moyens de réception d'au moins une trame de voix en provenance d'un terminal émetteur (110), via un canal de transmission (150) réservé à des données voix,
**caractérisé en ce que** ledit procédé comprend les étapes suivantes, pour chaque trame de voix reçue par lesdits moyens de réception :
- détection (702) d'un en-tête de données non voix compris dans ladite trame de voix (10'), ledit en-tête de données non voix comprenant des données de configuration relatives à la transmission de données non voix sur ledit canal de transmission réservé (150) ;
- en cas de détection positive, lecture desdites données de configuration ;
- construction d'une trame de voix partielle par extraction, depuis ladite trame de voix (10'), d'au moins une donnée non voix, en fonction desdites données de configuration lues ;
- transmission de ladite au moins une donnée non voix extraite vers des moyens de traitement (122) de données non voix.

7. Procédé selon la revendication 6, **caractérisé en ce que** lesdites données de configuration comprennent une information relative à un ensemble de données non voix compris dans ladite trame de voix.

8. Procédé selon l'une quelconque des revendications 6 et 7, **caractérisé en ce qu'**il comprend en outre les étapes suivantes :
- génération d'au moins une donnée voix aléatoire ;
- reconstitution d'une trame de voix complète (10") par insertion de ladite au moins une donnée voix aléatoire dans ladite trame de voix partielle ;
- transmission de ladite trame de voix complète (10") vers des moyens de décodage de données voix (123).

9. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de transmission selon au moins une des revendications 1 à 5 et/ou le procédé de gestion selon au moins une des revendications 6 à 8, lorsque ledit programme est exécuté sur un ordinateur.

10. Moyen de stockage lisible par ordinateur, éventuellement totalement ou partiellement amovible, stockant un programme d'ordinateur comprenant un jeu d'instructions exécutables par un ordinateur pour mettre en oeuvre le procédé de transmission selon au moins une des revendications 1 à 5 et/ou le procédé de gestion selon au moins une des revendications 6 à 8.

11. Terminal émetteur (110) destiné à la transmission de trames de voix comprenant :
- des moyens de génération d'au moins une trame de voix à partir d'un signal voix, chaque trame de voix comprenant des données voix ;
- des premiers moyens de transmission de ladite au moins une trame de voix vers au moins un terminal récepteur (120), via un canal de transmission (150) réservé à des données voix,
ledit terminal émetteur (110) étant **caractérisé en ce qu'**il comprend en outre :
- des premiers moyens d'obtention (201) de données de configuration relatives à la transmission de données non voix sur ledit canal de transmission réservé (150) ;
- des seconds moyens d'obtention (202) de données non voix ;
- des moyens de sélection (203) d'au moins une donnée voix (12) parmi les données voix de ladite trame de voix, ladite sélection étant effectuée en fonction desdites données de configuration ;
- des moyens de construction (204) d'une trame de voix dégradée (10') par remplacement de ladite au moins une donnée voix sélectionnée (12) avec au moins une desdites données non voix ;
- des moyens d'insertion d'un en-tête de données non voix dans ladite trame de voix dégradée (10'), ledit en-tête comprenant lesdites données de configuration ;
- des seconds moyens de transmission, vers le terminal récepteur (120), de ladite trame de voix dégradée (10') comprenant ledit en-tête, via ledit canal de transmission réservé (150).

12. Terminal récepteur (120) destiné à la gestion de trames de voix comprenant des moyens de réception d'au moins une trame de voix en provenance d'un terminal émetteur (110), via un canal de transmission (150) réservé à des données voix, ledit terminal récepteur (120) étant **caractérisé en ce qu'**il comprend en outre :
- des moyens de détection d'un en-tête de données non voix compris dans ladite trame de voix, ledit en-tête de données non voix comprenant des données de configuration relatives à la transmission de données non voix sur ledit canal de transmission réservé (150) ;
- des moyens de lecture desdites données de configuration, en cas de détection positive ;
- des moyens de construction d'une trame de voix partielle comprenant eux-mêmes des moyens d'extraction permettant d'extraire, depuis ladite trame de voix, au moins une donnée non voix, en fonction desdites données de configuration lues par lesdits moyens de lecture ;
- des premiers moyens de transmission de ladite au moins une donnée non voix extraite vers des moyens de traitement de données non voix.

13. Terminal récepteur selon la revendication 12, **caractérisé en ce qu'**il comprend en outre :
- des moyens de génération d'au moins une donnée voix aléatoire ;
- des moyens de reconstitution d'une trame de voix complète (10") par insertion de ladite au moins une donnée voix aléatoire dans ladite trame de voix partielle ;
- des second moyens de transmission de ladite trame de voix complète (10") vers des moyens de décodage de données voix (123).
